# DEMANDE DE BREVET EUROPEEN

(11) **EP 4 459 956 A1**
(43) Date de publication de la demande: **06.11.2024**
(21) Numéro de dépôt: 24305682.7
(22) Date de dépôt: 30.04.2024
(51) Int. Cl.: H04L 65/611, H04L 65/612, H04L 65/80, H04N 21/6405, H04N 21/6408, H04N 21/24

(54) **PRIORISATION DES FLUX DE DONNÉES ENTRE UNE SOURCE DE CONTENUS AUDIO-VIDÉOS ET DES CLIENTS DE TÉLÉCOMMUNICATION**

(30) Priorité: 04.05.2023 FR 2304476
(71) Demandeur: Orange, 92130 Issy-les-Moulineaux (FR)
(72) Inventeur: MARCHAND, Hervé, 92326 CHATILLON CEDEX (FR); RIVOALEN, Mathieu, 92326 CHATILLON CEDEX (FR)
(74) Mandataire: Regimbeau

(57) **Abrégé**

Procédé de transmission d'un ensemble de flux de données (F) à travers un réseau de télécommunication (NET), les flux de données étant transmis à des ensembles de clients, respectivement, ledit procédé comportant, l'affectation d'une qualité maximale allouée à un flux de données, en fonction d'un nombre de clients dans l'ensemble de clients auquel ledit flux de données est transmis.

## Description

### [DOMAINE DE L'INVENTION

La présente invention concerne le domaine de la transmission sur un réseau de télécommunication de flux de données, notamment comportant du contenu multimédia numérique, à savoir de contenus audio et/ou vidéo numériques, également appelés contenus audiovisuels.

Elle concerne plus particulièrement la gestion de cette transmission par exemple en cas de congestion du réseau de télécommunication.

Dans certaines situations, un même contenu peut devoir être transmis vers plusieurs récepteurs. C'est par exemple le cas de la vidéo à la demande, mais surtout de mode de diffusion en direct, ou « live » selon la terminologie habituelle en langue anglaise. Qu'il s'agisse de contenu audio (radiodiffusion) ou vidéo (télédiffusion), différents utilisateurs inscrivent un terminal de visualisation (téléviseur, ordinateur, terminal mobile, etc.) afin de recevoir un programme audiovisuel.

Typiquement, dans cette situation, la transmission est effectuée en mode multicast.

Dans un tel mode, les terminaux intéressés par la réception d'un contenu doivent joindre un groupe de terminaux ayant requis un abonnement au même contenu en utilisant, par exemple, un protocole IGMP (Internet Group Management Protocol) s'il s'agit de terminaux IPv4 ou le protocole MLD (Multicast Listener Discovery) s'il s'agit de terminaux IPv6. En effet, un terminal doit être membre d'un groupe pour recevoir un flux multicast donné.

C'est le réseau IP, en particulier des noeuds formés par des routeurs, qui est alors en charge de répliquer de façon optimale le trafic au plus près des terminaux. Ces noeuds forment un arbre de distribution.

Le mode m-ABR (multicast Adaptative Bit Rate) utilise une technique de transmission adaptative selon laquelle on sélectionne des segments de contenu plus ou moins volumineux en fonction de la bande passante courante sur le réseau de télécommunication. Ces transmissions sont effectuées par un transport multicast.

Ce mode multicast ABR a pour avantage de diminuer la consommation des capacités du réseau puisqu'une seule transmission permet d'acheminer le contenu au plus près des terminaux récepteurs, selon l'arbre de distribution.

Lorsque le réseau de communication est sujet à une congestion, la bande passante des flux m-ABR peut être réduite, en tirant profit du caractère adaptatif de ce mode de transmission.

Si plusieurs flux de données m-ABR sont concernés, ceux-ci peuvent voir leur bande passante réduite de façon arbitraire, et notamment indépendamment de l'impact que cette réduction peut avoir sur l'expérience générale pour l'ensemble des terminaux récepteurs.

Il existe donc un besoin d'améliorer les propositions actuelles de l'état de la technique.

### RESUME DE L'INVENTION

L'invention vise à améliorer l'expérience générale de l'ensemble des terminaux récepteur, notamment en cas de congestion du réseau de télécommunication.

Selon l'invention, cette amélioration passe par la prise en compte du nombre de récepteurs associés à chaque flux.

À ces fins, selon un premier aspect, la présente invention peut être mise en oeuvre par un procédé de transmission d'un ensemble de flux de données (F) à travers un réseau de télécommunication, les flux de données étant transmis à des ensembles de clients, respectivement, ledit procédé comportant, l'affectation d'une qualité maximale allouée à un flux de données, en fonction d'un nombre de clients dans ledit ensemble de clients auquel ledit flux de données est transmis.

Cette affection peut être déclenchée lors de la détection d'une situation de congestion dudit réseau de télécommunication. Elle peut aussi être déclenchée en cas de prévision d'une situation de congestion future (par exemple de façon statistique, ou bien par extrapolation d'une tendance), ou bien lors d'une baisse substantielle de la bande-passante du réseau, etc.

Ainsi, il est notamment possible de moduler les réductions de qualité (et donc de bande-passante) des flux de données en fonction d'un nombre d'utilisateurs impactés, afin d'optimiser une satisfaction globale.

Suivant des modes de réalisation préférés, l'invention comprend une ou plusieurs des caractéristiques suivantes qui peuvent être utilisées séparément ou en combinaison partielle entre elles ou en combinaison totale entre elles :
- lorsque ledit ensemble de clients comprend au moins deux clients, ledit flux est transmis en mode multicast, et lorsque ledit ensemble de clients ne comprend qu'un unique client, ledit flux est transmis en mode unicast. Cela permet notamment de diminuer la consommation du réseau des capacités du réseau de télécommunication.
- ladite affection d'une qualité maximale comprend, pour un flux multicast, la configuration d'une source dudit flux de données pour transmettre des données correspondant au mieux à ladite qualité maximale allouée audit flux de données. On optimise ainsi la transmission des flux dès leur point d'émission.
- ladite qualité maximale est plus élevée lorsque ledit nombre de client est plus élevé
- ladite affection d'une qualité maximale comprend pour un flux unicast, une modification du plan de service pour ledit flux de données afin qu'il ne comporte que des qualités inférieures ou égales à ladite qualité maximale allouée audit flux de données. Cela permet notamment de minimiser l'impact pour l'architecture global du système et d'être compatible avec les dispositifs existants.
- la qualité maximale allouée aux flux de données transmis aux ensembles de clients les plus nombreux n'est pas impactée. On ne pénalise ainsi pas les flux les plus demandés par les clients finaux, et l'optimisation porte sur les flux les moins demandés.
- Le procédé comporte une affectation d'une nouvelle qualité maximale allouée à un flux de données, au bout d'un délai supérieur à un seuil temporel déterminé. Cela permet une montée en puissance progressive des mécanismes de correction du réseau, afin de limiter les impacts dans un premier temps. Cette nouvelle qualité maximale peut par exemple être affectée lorsque ledit réseau est toujours en situation de congestion après ce seuil temporel.

Un autre aspect de l'invention concerne un dispositif de supervision comprenant un processeur configuré pour réaliser :
- affectation d'une qualité maximale allouée à un flux de données, en fonction d'un nombre de clients dans un ensemble de clients auquel ledit flux de données est transmis à travers ledit réseau de télécommunication.

Selon un mode de réalisation, le dispositif de supervision est en outre prévu pour détecter une situation de congestion d'un réseau de télécommunication, et déclencher l'affectation en cas de congestion.

Comme vu précédemment, le dispositif de supervision peut aussi déclencher l'affectation en cas de prévision d'une situation de congestion future (par exemple de façon statistique, ou bien par extrapolation d'une tendance), ou bien lors d'une baisse substantielle de la bande-passante du réseau, etc.

Un autre aspect de l'invention concerne un système comprenant une source dudit flux de données et un dispositif de supervision tel que précédemment décrit.

Un autre aspect de l'invention concerne un système tel que précédemment décrit, dans lequel ladite source comporte une interface prévue pour interopérer avec ledit dispositif de supervision.

Un autre aspect de l'invention concerne un programme d'ordinateur apte à être mis en oeuvre sur un dispositif de supervision, le programme comprenant des instructions de code qui, lorsqu'il est exécuté par un processeur, réalise les étapes du procédé tel que précédemment décrit.

Un autre aspect de l'invention concerne un support de données sur lequel a été mémorisé au moins une série d'instructions de code de programme pour l'exécution d'un procédé tel que précédemment décrit.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES FIGURES

Les dessins annexés illustrent l'invention :
- la figure 1 illustre un réseau de télécommunication permettant la mise en oeuvre d'un procédé selon des modes de réalisation de l'invention ;
- la figure 2 schématise un détail de réalisation, selon une mise en oeuvre de l'invention.

### DESCRIPTION DETAILLEE DE MODES DE REALISATION DE L'INVENTION

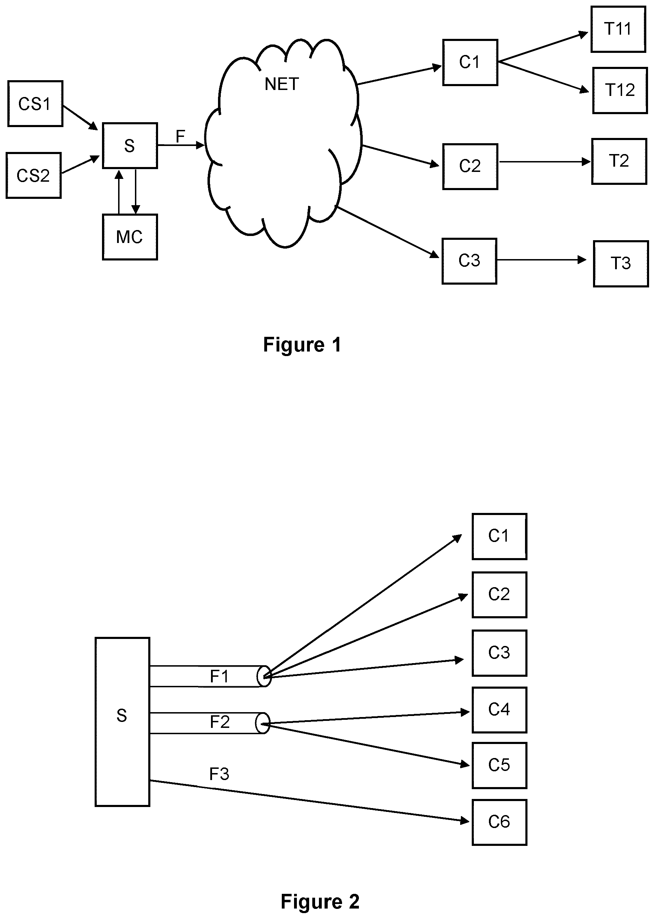

La figure 1 illustre un réseau de télécommunication permettant l'acheminement de flux de données entre un ou plusieurs serveurs de contenu, vers un ensemble de terminaux.

Ces terminaux peuvent être des terminaux de lecture de flux multimédia de différents types, tel que notamment un terminal mobile, un téléviseur connecté, un ordinateur, etc.

Le terminal mobile peut typiquement être un téléphone intelligent de type « smartphone » ou une tablette numérique, adapté pour recevoir des flux multimédias et à les produire sur une interface du terminal ou connecté audit terminal.

Le téléviseur TV peut être nativement connecté ou l'être par le truchement d'un dispositif associé tel que par exemple une clé HDMI connecté au téléviseur.

Un exemple de dispositif externe communiquant avec un téléviseur TV est Chromecast. Le Chromecast est un appareil lecteur de flux multimédias (passerelle multimédia) en temps réel développé et commercialisé par Google. L'appareil se branche sur le port HDMI d'un téléviseur et communique, par connexion Wi-Fi, avec un autre appareil connecté à Internet (ordinateur, smartphone, tablette...), afin d'afficher sur le téléviseur le contenu multimédia reçu depuis une application compatible avec la technologie Google Cast, depuis le navigateur Google Chrome présent sur un ordinateur, ou depuis certains appareils Android.

Dans ce dernier cas, le terminal de lecture de flux, ou contenus, multimédia peut être ce dispositif associé.

Les flux de données peuvent être des flux multimédias. Ceux-ci comprennent typiquement des flux (ou contenus) vidéo ou audio-vidéo. Il peut également s'agir de flux audio (musique, émissions radio...), ou de contenus interactifs (y compris jeux). Il peut s'agir de contenu à la demande ou de contenu « en direct » ou « live ». Ce mode de transmission peut être un mode de transmission de type « IPTV » (sigle de « *Internet Protocol Télévision* » en anglais), mais d'autres modes de transmission sont bien évidemment envisageables.

Dans l'exemple de la figure 1, deux serveurs de contenu CS1, CS2 peuvent fournir un flux de données F (par exemple du contenu vidéo) à des terminaux T11, T12, T2, T3, au travers du réseau de télécommunication NET, auquel ils sont connectés, de façon connue en soi. Ce réseau de télécommunication peut être composé de plusieurs réseaux interconnectés, notamment d'un réseau local, d'un réseau d'accès et d'un réseau étendu de type « Internet ».

Le réseau local peut être un réseau installé chez un utilisateur lui permettant de connecter différents terminaux à un point d'accès qui forme passerelle vers un réseau d'accès au réseau étendu. Un tel réseau local peut être de différentes technologies, par exemple Wi-Fi, Ethernet^{™}, etc.

Dans cet exemple, on suppose les terminaux situés dans une région géographique limitée. La transmission du flux de données F peut être effectuée en mode multicast. Ce flux de données F peut par exemple être un flux m-ABR (« multicast - Adaptative Bit Rate », en anglais).

D'une façon générale, le multicast ABR (Adaptive Bitrate) est une technologie de diffusion de contenu vidéo en streaming qui permet la transmission de contenu en un seul flux simultanément à plusieurs utilisateurs. (Contrairement à la diffusion en direct, unicast, qui envoie un flux de données distinct à chaque utilisateur).

Le multicast ABR utilise une méthode de distribution qui réduit la charge sur le réseau de l'opérateur et permet une diffusion de contenu à grande échelle. Il fonctionne en divisant le contenu en plusieurs flux de différents débits (ou « bitrates » en anglais) et en adaptant automatiquement le débit de diffusion en fonction des capacités de bande passante des utilisateurs connectés. Cela permet à chaque utilisateur de recevoir le contenu avec la meilleure qualité possible en fonction de son environnement de réseau.

Le flux de données F peut transiter entre un serveur multicast S et des clients C1, C2, C3. Il peut notamment s'agir respectivement d'un serveur m-ABR et de clients m-ABR.

Le serveur m-ABR est responsable de la transmission du contenu vidéo aux clients connectés via un réseau multicast. Il divise le contenu en plusieurs flux de différentes qualités (ou débits), chacun étant adapté aux capacités de bande passante du réseau et des utilisateurs. Les clients connectés peuvent alors choisir le flux de qualité approprié en fonction de leur environnement de réseau (réseau local permettant la connexion entre le client et le terminal), ou des capacités de ce terminal.

Le client m-ABR, quant à lui, est responsable de la réception du contenu vidéo, ou plus généralement du flux de données. Il se connecte au serveur m-ABR via le réseau multicast et choisit le flux de qualité approprié parmi ceux disponibles en s'y abonnant. Le client utilise également des algorithmes d'adaptation pour s'assurer que le débit de diffusion reste optimal en fonction des changements de bande passante.

Comme on l'a vu, en ABR (« *Adaptive Bitrate* » en anglais), le contenu vidéo est diffusé en plusieurs flux de différentes qualités (ou débits) pour s'adapter aux capacités de bande passante du réseau et des utilisateurs. Les qualités disponibles dépendent de la résolution, du débit et du codec vidéo utilisés.

Les qualités disponibles en ABR peuvent varier en fonction de la plateforme de streaming vidéo utilisée, mais en général et actuellement, les qualités courantes comprennent :
- Très basse qualité : souvent adaptée pour les utilisateurs avec des connexions Internet très lentes ou instables, cette qualité peut avoir une résolution de 240p et un débit de 200 kbps.
- Basse qualité : cette qualité convient pour les connexions Internet plus stables mais encore relativement lentes, avec une résolution de 360p et un débit de 400-700 kbps.
- Qualité standard : cette qualité convient pour la plupart des connexions Internet, avec une résolution de 480p ou 720p et un débit de 800 kbps à 2 Mbps.
- Haute qualité : cette qualité convient pour les connexions Internet rapides et fiables, avec une résolution de 1080p et un débit de 2-5 Mbps.
- Très haute qualité : cette qualité convient pour les connexions Internet très rapides, avec une résolution de 4K et un débit de plus de 10 Mbps.

Il est important de noter que les qualités disponibles peuvent varier en fonction des capacités de bande passante de l'utilisateur et du réseau, ainsi que de la qualité et de la complexité du contenu vidéo diffusé.

Le serveur S encapsule les données dans des paquets de données multicast et transmet ces paquets dans un arbre de distribution où ils sont acheminés jusqu'aux clients C1, C2, C3.

Les clients décapsulent les paquets multicast et les transmettent aux terminaux qui sont leurs sont rattachés, en mode unicast. Le client C1 transmet le flux de données aux terminaux T11 et T12, le client C2 transmet le flux de données au terminal T2 et le client C3 transmet le flux de données au terminal T3.

Dans une telle configuration, le dispositif d'accès peut préalablement procéder aux traitements nécessaires pour reformer les PDU (« Protocol Data Unit ») du mode multicast vers le mode unicast.

Les terminaux peuvent être rattachés aux clients, ou bien embarquer un tel client.

Dans un mode de réalisation, les clients C1, C2, C3 sont embarqués dans des dispositifs d'accès à internet, de type « box internet » ou boitier multiservice. Un exemple de tel dispositif est par exemple la Livebox^{™} de la société Orange. Ces dispositifs permettent de raccorder les différents terminaux d'un domicile ou d'une entreprise au réseau internet.

Les clients peuvent également être embarqués au sein des terminaux eux-mêmes.

La Figure 2 illustre un exemple de transmission de plusieurs flux de données, F1, F2, F3 depuis un serveur S vers des clients C1, C2, C3, C4, C5, C6. A chacun de ces clients peuvent être rattachés des terminaux, non représentés, permettant de produire les flux de données à l'utilisateur final, comme précédemment décrit.

Chaque flux de données est associé à un ensemble de clients. Ainsi, le flux F1 est associé aux clients C1, C2, C3 ; le flux F2 est associé aux clients C4, C5, et le flux F3 est associé au client C6.

Chaque flux est transmis à l'ensemble de clients associé. Cette transmission est effectuée en mode multicast si l'ensemble associé comprend au moins 2 clients.

Ainsi, les flux F1 et F2 sont transmis en mode multicast, tandis que le flux de données F3 est transmis en mode unicast.

Le procédé proposé peut prévoir la surveillance de la charge du réseau de télécommunication, ou, plus précisément de l'arbre de distribution associé à la transmission des flux de données du serveur S. Un dispositif de supervision, MC, peut être mis en oeuvre pour surveiller la charge du réseau. On peut ainsi déterminer en quasi-temps réel une situation de congestion du réseau, mais d'autres modes de détection de cette situation peuvent également être possible. De même, le dispositif de supervision peut également établir une prévision d'une situation de congestion future (par exemple de façon statistique, ou bien par extrapolation d'une tendance), ou bien une baisse substantielle de la bande-passante du réseau, etc.

La détermination d'une situation de congestion peut être effectuée par une comparaison d'une mesure de charge avec un seuil, ou avec plusieurs seuils.

Un seuil peut définir une situation de congestion lorsque la charge mesurée lui est supérieur.

Plusieurs seuils peuvent être définis, afin de déterminer plusieurs niveaux de congestion.

Le dispositif de supervision MC peut être en charge d'une part de la mesure de la charge du réseau de télécommunication NET afin de détecter une situation de congestion, et également de l'affectation d'une qualité maximale allouée à un flux de données.

Ce dispositif de supervision MC peut être déployé à proximité de la source multicast S.

En effet, la diffusion d'un contenu en multicast suivant un arbre de distribution, les différents flux de données issus d'une même source partagent davantage une même bande passante près de la racine de l'arbre de distribution. Aussi, les mesures de charge près de cette racine sont plus pertinentes et mieux à même de révéler l'état réel de la charge du réseau.

Dans un cas particulier, le dispositif de supervision MC peut être intégré au sein de la source multicast S. Dans un cas plus général, les deux dispositifs peuvent être des dispositifs distincts mais sont aptes à coopérer.

Selon le procédé proposé, lors de la détection d'une situation de congestion du réseau de télécommunication, on affecte une qualité maximale allouée à un flux de données en fonction d'un nombre de clients dans l'ensemble associé.

Il est à noter que l'affectation est faite pour un flux de données, et non pas par segments ou par paquets. La qualité maximale est affectée pour un flux comprenant un ensemble de paquets de données.

Il est par ailleurs à noter que cette qualité maximale à celle à laquelle les clients peuvent, au maximum, requérir le contenu. Cette qualité affectée est garantie aux clients, par opposition aux modalités de transmission de type « best effort » comme le mécanisme DiffServ décrit dans le RFC 2474 de l'IETF.

Le déclenchement de l'affectation d'une qualité maximale peut toutefois être déclenchée dans d'autres situations, comme il a été vu précédemment.

Il est ainsi possible d'affecter une qualité maximale plus élevée à un flux de données associé à un ensemble de cardinalité supérieure. Autrement dit, la qualité maximale est plus élevée lorsque le nombre de clients est plus élevé

Ainsi, si un flux F_{A} est associé à un ensemble de clients de cardinalité n_{A}, et si un flux F_{B} est associé à un ensemble de cardinalité ns, on peut affecter des qualités maximales Q_{A} et Q_{B}, respectivement, aux flux F_{A} et F_{B}, tels que n_{A}>n_{B} → Q_{A}>Q_{B}.

Dans l'exemple de la figure 2, le flux F₁ est associé à un ensemble de 3 clients, le flux F2 est associé à un ensemble de 2 clients et le flux F3 est associé à un ensemble d'un seul client (et est donc un flux unicast).

On peut donc affecter une qualité maximale, respectivement Q1, Q2, Q3, à ces flux de sorte que Q1>Q2>Q3.

La qualité maximale allouée à un flux de données est la qualité maximale auquel peut avoir accès les terminaux connectés au client correspondant. Les terminaux peuvent en effet choisir automatiquement (et/ou laisser l'utilisateur effectuer un choix manuel) une qualité parmi les qualités disponibles pour le flux reçu.

Ces qualités correspondent notamment à un débit du flux de données qui est notamment fonction, dans le cas d'un flux vidéo, d'un nombre d'images par secondes et d'une taille d'images.

On optimise ainsi la satisfaction globale des utilisateurs, en fonction des ressources disponibles sur le réseau de télécommunication. En particulier, le procédé permet de satisfaire le plus grand nombre en offrant la qualité maximale la plus élevée aux flux de données transmis à un plus grand nombre de clients, en éventuellement sacrifiant sur la qualité maximale des flux transmis à un plus petit nombre de clients.

En effet, si on considère qu'une situation de congestion de ce réseau de télécommunication nécessite la dégradation des qualités maximales d'au moins certains flux de données transmis, le procédé décrit permet de privilégier les flux de données transmis à un nombre plus important de clients, au détriment de ceux transmis à un nombre moins important.

En diminuant la qualité disponible des flux transmis à moins de clients, il en résulte que moins d'utilisateurs sont techniquement impactés par la dégradation de qualité et donc potentiellement insatisfaits.

On évite ainsi de dégrader la qualité de façon indifférenciée ou arbitraire comme selon l'état de la technique, où, par exemple, l'on réduit la qualité maximale de tous les flux de données de la même façon. Autrement dit, on évite de faire entrer en concurrence, en cas de congestion du réseau, un flux unicast et un flux multicast (en m-ABR par exemple), qui délivre un grand nombre d'utilisateurs.

Selon un mode de réalisation, lors d'une détection d'une situation de congestion, le ou les flux associés aux ensembles de clients les plus importants ne sont pas impactés, et se voient donc affecté la qualité maximale la plus élevée. Inversement, les flux de données associés à des ensembles de clients de cardinalité moindre sont affectés à des qualités maximales plus réduites.

Par exemple, selon un mode de réalisation, on peut définir des seuils sur les nombres de clients dans les ensembles de clients.

Par exemple, en cas de congestion, on diminue la qualité maximale allouée aux flux associés à des ensembles de clients au-dessous du seuil, mais pas celle allouée aux flux associés à des ensemble de clients au-dessus de ce seuil.

Selon un mode de réalisation, en cas de situation de congestion, on privilégie la qualité des flux vidéos dans l'ordre suivant :
- On attribue un profil « Priorité 1 » aux flux multicast délivrant plus de N clients (N=20 par exemple)
- On attribue un profil « Priorité 2 » aux flux multicast délivrant moins de N clients (mais plus de 2 clients)
- On attribue un profil « Priorité 3 » aux flux unicast.

Dans cet exemple, deux seuils sont donc définis, N et 2 (c'est-à-dire le point de décision unicast/multicast).

Pour ces 3 profils, on peut définir des règles d'affectation de la qualité maximale allouée. Par exemple, la qualité maximale allouée au profil « priorité 1 » n'est pas modifiée, la qualité maximale allouée au profil « priorité 2 » est légèrement abaissée, et la qualité maximale allouée au profil « priorité 3 » est plus substantiellement abaissée.

L'affectation d'une qualité maximale allouée peut consister à supprimer les qualités disponibles les plus élevées. Par exemple, dans le cas du profil « priorité 2 », la qualité disponible la plus élevée est supprimée, dans le cas du profil « priorité 3 », les deux qualités disponibles les plus élevées sont supprimées.

Pour les flux de données transmis en unicast, (exemple du flux F3 sur la figure 2), l'affection d'une qualité maximale comprend, pour un flux unicast, une modification du plan de service pour ce flux de données afin qu'il ne comporte que des qualités inférieures ou égales à la qualité maximale allouée au flux de données F3.

Dès lors le client C6 va réagir en s'abonnant à une qualité disponible dans le plan de service afin de continuer à recevoir le contenu correspondant au flux de données F3.

L'affection d'une qualité maximale peut comprendre, pour un flux multicast, F1, F2, la configuration de la source S du flux de données pour transmettre des données correspondant au mieux à cette qualité maximale allouée.

Le dispositif de supervision, MC, peut être prévu pour configurer la source S en lui spécifiant les résolutions (ou qualités) à transmettre dans le flux m-ABR. La source S et le dispositif de supervision peuvent par exemple interopérer au moyen d'une interface API (pour « Application Programming Interface » en anglais) présentée par la source S.

Selon un mode de réalisation, il peut être prévu d'affecter une nouvelle qualité maximale allouée à un flux de données lorsque le réseau est toujours en situation de congestion au bout d'un délai supérieur à un seuil temporel déterminé. On peut par exemple fixer de seuil temporel à quelques minutes.

Ainsi, une réduction d'une qualité sur un flux pour répondre à une congestion du réseau peut ne pas suffire, et, au bout d'un certain temps, si le réseau est toujours congestionné, de nouvelles mesures peuvent être prises. Notamment, une nouvelle limitation des qualités disponibles pour un flux de données peut être décidée.

Il est à noter que, comme précisé précédemment, le plan de service correspond à aux qualités disponibles pour le flux de données. Il est ici proposé de faire varier les qualités disponibles auxquels les clients peuvent s'abonner en fonction de la charge et d'un nombre de clients ayant souscrit à un flux de données. L'affectation d'une qualité maximale (les clients pouvant toujours s'abonner à des qualités moindres en fonction de leurs conditions locales) est effectuée pour le flux dans son ensemble, c'est-à-dire pour un contenu. Cette qualité est établie entre les parties du réseau de diffusion de contenu et n'est pas imposée par l'infrastructure réseau.

Bien entendu, la présente invention n'est pas limitée aux exemples et au mode de réalisation décrits et représentés, mais est défini par les revendications. Elle est notamment susceptible de nombreuses variantes accessibles à l'homme de l'art.

## Revendications

1. Procédé de transmission d'un ensemble de flux de données (F) à travers un réseau de télécommunication (NET), les flux de données étant transmis à des ensembles de clients, respectivement, ledit procédé comportant l'affectation d'une qualité maximale allouée à un flux de données, en fonction d'un nombre de clients dans l'ensemble de clients auquel ledit flux de données est transmis.

2. Procédé selon la revendication précédente dans lequel lorsque ledit ensemble de clients comprend au moins deux clients, ledit flux est transmis en mode multicast, et lorsque ledit ensemble de clients ne comprend qu'un unique client, ledit flux est transmis en mode unicast

3. Procédé selon la revendication précédente, dans lequel ladite affection d'une qualité maximale comprend, pour un flux multicast, la configuration d'une source (S) dudit flux de données (F) pour transmettre des données correspondant au mieux à ladite qualité maximale allouée audit flux de données (F).

4. Procédé selon l'une des revendications précédentes, dans lequel ladite qualité maximale est plus élevée lorsque ledit nombre de client est plus élevé.

5. Procédé selon l'une des revendications précédentes, dans lequel ladite affection d'une qualité maximale comprend pour un flux unicast, une modification du plan de service pour ledit flux de données afin qu'il ne comporte que des qualités inférieures ou égales à ladite qualité maximale allouée audit flux de données (F).

6. Procédé selon l'une des revendications précédentes, dans lequel la qualité maximale allouée aux flux de données transmis aux ensembles de clients les plus nombreux n'est pas impactée.

7. Procédé selon l'une des revendications précédentes, comportant une affectation d'une nouvelle qualité maximale allouée à un flux de données au bout d'un délai supérieur à un seuil temporel déterminé.

8. Dispositif de supervision (MC) comprenant un processeur configuré pour affecter une qualité maximale allouée à un flux de données (F), en fonction d'un nombre de clients dans un ensemble de clients (C1, C2, C3) auquel ledit flux de données est transmis à travers ledit réseau de télécommunication.

9. Système comprenant une source (S) dudit flux de données et un dispositif de supervision (MC) selon la revendication précédente.

10. Système selon la revendication précédente, dans lequel ladite source comporte une interface prévue pour interopérer avec ledit dispositif de supervision (MC).

11. Programme d'ordinateur apte à être mis en oeuvre sur un dispositif de supervision (MC), le programme comprenant des instructions de code qui, lorsqu'il est exécuté par un processeur, réalise les étapes du procédé définie dans les revendications 1 à 7.

12. Support de données sur lequel a été mémorisé au moins une série d'instructions de code de programme pour l'exécution d'un procédé selon l'une des revendications 1 à 7.
